# EUROPEAN PATENT APPLICATION

(11) **EP 4 191 504 A1**
(43) Date of publication of application: **07.06.2023**
(21) Application number: 21891914.0
(22) Date of filing: 10.11.2021
(51) Int. Cl.: G06Q 40/02, G07D 11/245

(54) **MONEY PROCESSING SYSTEM AND MONEY PROCESSING METHOD**

(30) Priority: 12.11.2020 JP 2020188642
(71) Applicant: GLORY LTD., Himeji-shi Hyogo 670-8567 (JP)
(72) Inventor: TAGASHIRA, Kenichi, Himeji-shi, Hyogo 670-8567 (JP)
(74) Representative: Jenkins, Peter David
(86) International application number: PCT/JP2021/041389
(87) International publication number: WO 2022/102668

(57) **Abstract**

In order to appropriately replenish a money handling apparatus with money, a money handling system includes: a first money handling apparatus that performs a plurality of kinds of transactions in which different fitness-types of fit money are dispensed; a management server that determines, when the first money handling apparatus needs to be replenished with money, a breakdown of the money for replenishment, based on information on the plurality of kinds of transactions performed by the first money handling apparatus wherein the breakdown shows a quantity of each fitness-type of fit money to be included in the money for replenishment; and a second money handling apparatus that dispenses the money for replenishment, based on a result of determination by the management server. The first money handling apparatus is replenished with the money for replenishment dispensed from the second money handling apparatus.

## Description

### TECHNICAL FIELD

The present disclosure relates to a money handling system and a money handling method for managing money in a money handling apparatus.

### BACKGROUND ART

Conventionally, money handling apparatuses for handling money have been used in various places. PATENT LITERATURE 1 discloses a system including a plurality of money handling apparatuses installed in a store. When shortage of money occurs in a money handling apparatus used for checkout, a clerk replenishes this apparatus with money dispensed from another money handling apparatus. PATENT LITERATURE 1 describes that the clerk determines the quantity of money for replenishment, based on his/her past experience. PATENT LITERATURE 2 discloses a system including a money handling apparatus and a management apparatus. The management apparatus simulates a storage state of money in the money handling apparatus by using a prepared simulation model, and predicts a timing when this money handling apparatus is required to be replenished with money.

### CITATION LIST

### [PATENT LITERATURE]

[PTL 1] WO2011/121735
[PTL 2] U.S. Patent No. 10223663

### SUMMARY OF THE INVENTION

### PROBLEMS TO BE SOLVED BY THE INVENTION

The conventional technique uses the past experience or the simulation model, and information on money actually handled in the money handling apparatus is not reflected in some cases. If the actual state of money handling in the money handling apparatus is different from the past experience or the simulation model, replenishment of the money handling apparatus with money cannot be appropriately performed.

The present disclosure is made in view of the conventional technique including the above problem, and one object of the present disclosure is to provide a money handling system and a money handling method capable of appropriately replenishing a money handling apparatus with money.

### SOLUTION TO THE PROBLEMS

A money handling system according to the present disclosure includes: a first money handling apparatus configured to perform a plurality of kinds of transactions in which different fitness-types of fit money are dispensed; a management server configured to determine, when the first money handling apparatus needs to be replenished with money, a breakdown of the money for replenishment, based on information on the plurality of kinds of transactions performed by the first money handling apparatus wherein the breakdown shows a quantity of each fitness-type of fit money to be included in the money for replenishment; and a second money handling apparatus configured to dispense the money for replenishment, based on a result of determination by the management server.

In the above configuration, the transactions performed by the first money handling apparatus may include: an ATM transaction in which money corresponding to an amount of money that a customer has withdrawn from an account at a financial institution is dispensed; and a checkout transaction in which money corresponding to an amount of change to be returned to the customer at checkout is dispensed. The fit money of different fitness-types may include: first fit money to be dispensed in the ATM transaction; and second fit money to be dispensed in the checkout transaction. The management server may determine the breakdown showing a quantity of the first fit money and a quantity of the second fit money to be included in the money for replenishment, based on information on the ATM transaction and the checkout transaction performed by the first money handling apparatus.

In the above configuration, the management server may determine the breakdown showing the quantity of each fitness-type of fit money to be included in the money for replenishment, based on the numbers of the plurality of kinds of transactions performed by the first money handling apparatus within a predetermined period.

In the above configuration, the management server may determine the breakdown showing the quantity of each fitness-type of fit money to be included in the money for replenishment, based on a quantity of each fitness-type of fit money increased or decreased in the first money handling apparatus within a predetermined period.

In the above configuration, the management server may input data indicating a quantity of each fitness-type of fit money that has been increased or decreased in the first money handling apparatus within a predetermined period, into a simulation model for predicting a quantity of each fitness-type of fit money that will be dispensed from the first money handling apparatus, perform a simulation with the simulation model, and determine the breakdown showing the quantity of each fitness-type of fit money to be included in the money for replenishment, based on a result of the simulation.

In the above configuration, when the second money handling apparatus cannot dispense the money for replenishment based on the breakdown determined for each fitness-type of fit money by the management server, the second money handling apparatus may notify this fact.

In the above configuration, when the second money handling apparatus cannot dispense each fitness-type of fit money based on the breakdown of the money for replenishment determined by the management server, the second money handling apparatus may perform at least one of: a substitute dispensing process for dispensing money, of which a fitness type is changed from that of the fit money but a denomination is not changed from that of the fit money; a substitute dispensing process for dispensing money, of which a fitness type is not changed from that of the fit money but a denomination is changed from that of fit money; and a substitute dispensing process for dispensing money, of which both a fitness type and a denomination is changed from those of the fit money.

In the above configuration, when the management server recognizes that the money for replenishment cannot be dispensed from the second money handling apparatus based on the breakdown determined for each fitness-type of fit money, the management server may notify this fact.

In the above configuration, when the management server recognizes that the money for replenishment cannot be dispensed from the second money handling apparatus based on the breakdown determined for each fitness-type of fit money, the management server may perform a process for requesting a CIT company to deliver money.

A money handling method performed by a money handling system, includes: performing a plurality of kinds of transactions in which different fitness-types of fit money are dispensed from a first money handling apparatus; determining, by a management server, a breakdown of money when replenishing the first money handling apparatus with the money, based on information on the plurality of kinds of transactions performed by using the first money handling apparatus wherein the breakdown shows a quantity of each fitness-type of fit money to be included in the money for replenishment; and dispensing, from a second money handling apparatus, the money for replenishment, based on a result of determination by the management server.

### ADVANTAGEOUS EFFECTS OF THE INVENTION

According to the money handling system of the present disclosure, replenishment of a money handling apparatus with money can be appropriately performed.

### BRIEF DESCRIPTION OF THE DRAWINGS

[FIG. 1] FIG. 1 is a schematic diagram illustrating a money handling system according to an embodiment of the present disclosure.
[FIG. 2] FIG. 2 is a block diagram showing a configuration example of a first money handling apparatus and a second money handling apparatus.
[FIG. 3] FIG. 3 shows an example of transaction information.
[FIG. 4] FIG. 4 shows a specific example of a money handling system.
[FIG. 5] FIG. 5 is a flowchart showing a flow of a process in which a management server determines a breakdown of money for replenishment.
[FIG. 6] FIG. 6 illustrates an example for explaining a breakdown of money for replenishment determined by the management server.

### DESCRIPTION OF EMBODIMENTS

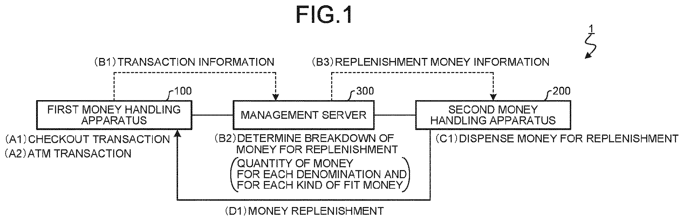

Hereinafter, embodiments of a money handling system and a money handling method according to the present disclosure will be described with reference to the accompanying drawings. FIG. 1 is a schematic diagram illustrating a money handling system 1 according to the present embodiment. The money handling system 1 shown in FIG. 1 is an example of the money handling system according to the present disclosure. The money handling system 1 includes a first money handling apparatus 100, a second money handling apparatus 200, and a management server 300. The management server 300 is communicably connected to the first money handling apparatus 100 and the second money handling apparatus 200. The money handling system 1 may be used in any place. In the present embodiment, an example in which the money handling system 1 is used in a store where customers purchase items, will be described.

The first money handling apparatus 100 can perform a depositing process and a dispensing process of money. The first money handling apparatus 100 is installed at a checkout counter where checkout is performed for a customer when a transaction with the customer is made. The first money handling apparatus 100 may be connected to a POS (Point of Sales) terminal.

The first money handling apparatus 100 performs a plurality of types of transactions including a checkout transaction (A1) and an ATM transaction (A2), as shown in FIG. 1. In the checkout transaction, a customer can pay, to the store, an amount of money for purchasing items. The checkout transaction includes: a depositing process in which money for purchasing items is deposited in the first money handling apparatus 100; and a dispensing process in which change is dispensed from the first money handling apparatus 100. For example, the first money handling apparatus 100 connected to the POS (Point of Sales) terminal is used for the checkout transaction. Although detailed description is omitted here, the checkout method by using apparatuses has been known in the prior art.

In the ATM transaction, a customer withdraws cash from a financial account owned by the customer, or a customer deposits cash into a financial account owned by the customer. The ATM transaction includes: a depositing process in which money to be deposited into a customer's financial account is deposited in the first money handling apparatus 100; and a dispensing process in which money withdrawn from a customer's financial account is dispensed from the first money handling apparatus 100. For example, the customer can obtain money withdrawn from his/her financial account by using the first money handling apparatus 100 at the checkout counter, in the same manner as he/she obtains money withdrawn from the financial account by using an ATM. Such a dispensing process is sometimes called cash-out.

The first money handling apparatus 100 can sort money into fit money and unfit money according to the degree of damage of the money. For example, the fit money is money that can be used for a dispensing process in at least one of the plurality of types of transactions. For example, the unfit money is money that is heavily damaged or stained and therefore cannot be used for the dispensing process in at least one of the plurality of types of transactions. The fit money deposited in the first money handling apparatus 100 can be used for the dispensing process. The unfit money deposited in the first money handling apparatus 100 is not used for the dispensing process. For example, the unfit money is collected from the first money handling apparatus 100 and deposited in the second money handling apparatus 200 by a clerk.

The first money handling apparatus 100 can further sort the fit money into fit money suitable for ATM transactions and other fit money. The first money handling apparatus 100 can use the fit money suitable for ATM transactions, for a dispensing process in an ATM transaction, for example. The first money handling apparatus 100 can use the other fit money for a dispensing process in a checkout transaction in the store, for example.

The first money handling apparatus 100 can perform money handling processes while discriminating ATM fit money for ATM transactions, store fit money for store checkout transactions, and unfit money. That is, the money handling processes performed by the first money handling apparatus 100 includes a process of sorting money into any of the ATM fit money, the store fit money, and the unfit money. In the depositing process, the first money handling apparatus 100 recognizes deposited money, sorts the money into the ATM fit money, the store fit money, and the unfit money, and stores the money inside the first money handling apparatus 100. In the dispensing process, the first money handling apparatus 100 does not dispense the unfit money while the first money handling apparatus 100 dispenses the ATM fit money and the store fit money. Specifically, the first money handling apparatus 100 dispenses the store fit money in the dispensing process of the checkout transaction, and dispenses the ATM fit money in the dispensing process of the ATM transaction.

The second money handling apparatus 200 can perform a money dispensing process. The second money handling apparatus 200 is installed in a back office of the store, for example. However, the second money handling apparatus 200 may be installed in any place. The second money handling apparatus 200 may be installed near the checkout counter, for example. The dispensing processes performed by the second money handling apparatus 200 include a dispensing process of dispensing money for replenishing the first money handling apparatus 100. The second money handling apparatus 200 may be capable of performing a money depositing process. For example, the second money handling apparatus 200 may be capable of performing a depositing process of depositing money collected from the first money handling apparatus 100. The second money handling apparatus 200 may be capable of performing money handling processes for any one of a plurality of types of transactions including the checkout transaction and the ATM transaction. For example, the second money handling apparatus 200 may be capable of performing the same money handling processes as those performed by the first money handling apparatus 100, in the checkout transaction and/or the ATM transaction.

The second money handling apparatus 200 can sort money into fit money that can be dispensed in the dispensing process and unfit money that cannot be used for the dispensing process, according to the degree of damage of the money. The unfit money is not used for the dispensing process after having been deposited in the second money handling apparatus 200 in the depositing process. For example, the unfit money deposited in the second money handling apparatus 200 is collected from the second money handling apparatus 200 by a person in charge of a cash-in-transit (CIT) company. The fit money can be used for the dispensing process after having been deposited in the second money handling apparatus 200 in the depositing process. The fit money can be used for the dispensing process of dispensing money for replenishing the first money handling apparatus 100.

The second money handling apparatus 200 can further sort the fit money into a plurality of fitness-types of fit money according to the degree of damage of the fit money. For example, the second money handling apparatus 200 can sort the fit money into fit money suitable for ATM transactions and other fit money. Hereinafter, the fit money suitable for ATM transactions is referred to as ATM-fit money, and the other fit money is referred to as store-fit money.

The second money handling apparatus 200 performs money handling processes while discriminating ATM-fit money, store-fit money, and unfit money. That is, the money handling processes performed by the second money handling apparatus 200 include a process of sorting money into any of the ATM-fit money, the store-fit money, and the unfit money. In the depositing process, the second money handling apparatus 200 recognizes deposited money, sorts the money into the ATM-fit money, the store-fit money and the unfit money, and stores the money inside the second money handling apparatus 200. In the dispensing process, the second money handling apparatus 200 does not dispense the unfit money while the second money handling apparatus 200 dispenses the fit money. At least either the ATM-fit money or the store-fit money is dispensed in the dispensing process. The dispensing processes performed by the second money handling apparatus 200 include a dispensing process of dispensing money to be used for replenishing the first money handling apparatus 100.

In the money handling system 1, for example, the first money handling apparatus 100 is replenished with money dispensed from the second money handling apparatus 200. The management server 300 can determine a breakdown, for each kind, of money for replenishment to be dispensed from the second money handling apparatus 200.

A method in which the management server 300 determines a breakdown, for each kind, of money for replenishment will be described. The management server 300 is a computer device including an operation unit and a display unit, for example. The management server 300 is connected to the first money handling apparatus 100 and the second money handling apparatus 200 via a network, for example. The management server 300 transmits/receives information to/from the first money handling apparatus 100 and the second money handling apparatus 200.

As shown in FIG. 1, the management server 300 acquires transaction information from the first money handling apparatus 100 (B1). The transaction information includes information indicating the number of checkout transactions and the number of ATM transactions, which have been performed in the first money handling apparatus 100. The management server 300 acquires the transaction information from the first money handling apparatus 100 based on settings prepared in advance. The settings are stored in a memory of the management server 300, for example. However, the settings may be stored in any place. The settings may be stored in a memory of the first money handling apparatus 100, for example. The settings include a condition for the management server 300 to acquire the transaction information from the first money handling apparatus 100. For example, the condition is set such that the management server 300 acquires the transaction information from the first money handling apparatus 100 at a predetermined time of day. Alternatively, the condition may be set such that the first money handling apparatus 100 transmits the transaction information to the management server 300 at a predetermined time of day, and the first money handling apparatus 100 may transmit the information to the management server 300, based on the setting.

The management server 300 determines a breakdown of money for replenishing the first money handling apparatus 100, based on the transaction information acquired from the first money handling apparatus 100 (B2). The money for replenishing the first money handling apparatus 100 is dispensed from the second money handling apparatus 200. It means that the breakdown determined by the management server 300 is a breakdown of money to be dispensed from the second money handling apparatus 200 for the replenishment.

For example, the management server 300 determines a breakdown, for each denomination, of money for replenishment to be dispensed from the second money handling apparatus 200, based on a ratio between the number of checkout transactions and the number of ATM transactions, which have been performed in the first money handling apparatus 100 within a predetermined period in the past. The management server 300 determines, for each denomination and for each fitness-type, the quantity of money for replenishing the first money handling apparatus 100. In the money handling system 1, money that can be dispensed in the dispensing process is limited to fit money and unfit money cannot be dispensed in the dispensing process. It means that the breakdown determined by the management server 300 is a breakdown, for each denomination and for each fitness-type of fit money, of the quantity of money to be used for replenishing the first money handling apparatus 100.

For example, in a case where it is determined to replenish the first money handling apparatus 100 with three hundred 1,000-JPY notes, if the ratio of the number of ATM transactions to the number of checkout transactions, which have been performed within the predetermined period in the past, is 2:1, the management server 300 determines a breakdown of three hundred 1,000-JPY notes to be two hundred ATM-fit notes and one hundred store-fit notes. The numbers of transactions to be compared are not limited to the number of all ATM transactions and the number of all checkout transactions within the predetermined period. The targets to be compared may be limited to the number of ATM transactions in which dispensing processes were performed and the number of checkout transactions in which dispensing processes were performed. The targets to be compared may be limited to a denomination for which a breakdown is to be determined. For example, in the above case of 1,000-JPY notes, the number of ATM transactions in which 1,000-JPY notes were deposited or dispensed may be compared to the number of checkout transactions in which 1,000-JPY notes were deposited or dispensed. The targets to be compared may further be limited to transactions in which 1,000-JPY notes were deposited/dispensed. For example, in the above case of 1,000-JPY notes, the number of ATM transactions in which 1,000-JPY notes were dispensed may be compared to the number of checkout transactions in which 1,000-JPY notes were deposited.

The transaction information may include information on the kinds and the quantity for each kind of money deposited/dispensed in each transaction. The management server 300 may determine a breakdown of money for replenishment, based on the kinds and the quantity for each kind of money deposited/dispensed in checkout transactions and on the kinds and the quantity for each kind of money deposited/dispensed in ATM transactions. For example, in a case where it is determined to replenish the first money handling apparatus 100 with three hundred 1,000-JPY notes, if a ratio of the number of ATM-fit 1,000-JPY notes decreased within a predetermined period in the past to the number of store-fit 1,000-JPY notes decreased within the predetermined period in the past, is 2:1, the management server 300 may determine, based on this ratio, a breakdown of three hundred 1,000-JPY notes to be two hundred ATM-fit 1,000-JPY notes and one hundred store-fit 1,000-JPY notes.

When determining a breakdown of money for replenishment, the management server 300 may use information other than the transaction information. Specifically, the management server 300 may change the proportion for each fitness-type of fit money, based on settings prepared in advance. For example, if the number of ATM transactions tends to increase on payday of companies near the store, settings may be prepared such that the proportion of ATM-fit money on the payday is increased compared to the other days. For example, if the number of checkout transactions tends to increase on a day when an event is held near the store, settings may be prepared such that the proportion of store-fit money on the event day is increased compared to the other days.

After the management server 300 has determined the breakdown of the money for replenishment for each denomination and for each fitness-type of fit money, based on the transaction information, the management server 300 can change the breakdown, based on settings prepared in advance. For example, in a case where the management server 300 determined that the number of ATM-fit 1,000-JPY notes is two hundred and the number of store-fit 1,000-JPY notes is one hundred based on the transaction information, as described above, if a setting to increase ATM-fit money by 10% has been prepared in advance, the management sever 300 changes the number of ATM-fit 1,000-JPY notes to two hundred and twenty, i.e., increases the number by 10%, and changes the number of store-fit 1,000-JPY notes to eighty.

The management server 300 may predict the quantity of money, for each fitness-type of fit money, to be dispensed from the first money handling apparatus 100 after replenishing the first money handling apparatus 100 with money, and may determine a breakdown of the money for replenishment, based on the prediction result. The management server 300 increases the proportion of ATM-fit money when the prediction result indicates an increase in ATM transactions. The management server 300 increases the proportion of store-fit money when the prediction result indicates an increase in checkout transactions.

For example, the management server 300 generates sequence data based on transaction information including: the number of ATM transactions and the number of checkout transactions, which have been performed in the first money handling apparatus 100 within a predetermined period in the past; and the kinds and the quantity for each kind of money deposited/dispensed in each transaction. Then, the management server 300 inputs the sequence data into a simulation model. For example, the sequence data inputted to the simulation model enables obtainment of a result indicating a time period until at least one of the quantities, for each fitness-type of fit money for each denomination of money stored in the first money handling apparatus 100, becomes 0 (zero). The management server 300 displays the simulation result on a predetermined display unit. This result may include information that indicates time series variation that is an increase/decrease, with time, of money for each denomination and for each fitness-type of fit money. The result may include information that indicates when the quantity of unfit money deposited in the first money handling apparatus 100 will reach the full storage capacity of the apparatus 100, i.e., information indicating a period of time until the quantity of unfit money reaches a predetermined quantity set in advance. The simulation model for predicting the quantity of money, for each denomination and for each fitness-type of fit money, to be dispensed from the first money handling apparatus 100 is stored in the memory of the management server 300 in advance. It is possible to precisely predict the breakdown of money for replenishment by performing a simulation in which transaction information on transactions that have been actually performed within the predetermined period is inputted to the simulation model.

For example, through the simulation, it is possible to obtain the prediction result indicating, for each denomination and for each fitness-type of fit money, the quantity of money to be dispensed from the first money handling apparatus 100 within the business hours of the store on that day after replenishing the first money handling apparatus 100 with money. In a case where it is determined to replenish the first money handling apparatus 100 with three hundred 1,000-JPY notes, if the prediction result indicates that the ratio of ATM-fit 1,000-JPY notes to store-fit 1,000-JPY notes, which will be dispensed after the replenishment, is 2:1, the management server 300 determines a breakdown of three hundred 1,000-JPY notes to be two hundred ATM-fit 1,000-JPY notes and one hundred store-fit 1,000-JPY notes.

When the first money handling apparatus 100 is to be replenished with a plurality of denominations of money, the management server 300 performs, for money of each denomination, a process of determining a breakdown for each fitness-type of fit money, as described above. As a result, the quantity of money to be used for the replenishment is determined for each denomination, and the quantity of money of each fitness-type of fit money is further determined for each denomination.

When determining a breakdown of money for replenishment, the management server 300 may use transaction information corresponding to any period of time in the past. For example, when generating sequence data, a time period may be designated through the operation unit of the management server 300, and the transaction information during the designated time period is used for generating the sequence data. For another example, the time period for transaction information to be used for generating the sequence data may be set in advance. In this case, for example, the time period may be set to use transaction information obtained during a period up to a point in time a few hours tracking back from a time when replenishment of the first money handling apparatus 100 with money is determined. The time period may be set to use transaction information obtained during a period up to a point in time the replenishment of the first money handling apparatus 100 with money is determined from a time when the business on that day is started. The time period, during which transaction information used for generating the sequence data is to be obtained, can be changed through settings.

The method of determining whether the first money handling apparatus 100 is to be replenished with money is not particularly limited. The first money handling apparatus 100 may detect a denomination of money of which the quantity has decreased and reached a predetermined threshold value, determine that replenishment of money of this denomination needs to be performed, and notify the management server 300 of this determination result. The management server 300 may manage money being stored in the first money handling apparatus 100, detect a denomination of money of which the quantity has decreased and reached the threshold value, and determine to perform replenishment of money of this denomination. The clerk may determine to replenish the first money handling apparatus 100 with money, and inputs a denomination of money for replenishment, into the management server 300. Monitoring of the decreased quantity of money inside the first money handling apparatus 100 may not be performed only for each denomination. For example, the monitoring of the money inside the first money handling apparatus 100 may be performed for each denomination and for each fitness-type of fit money. In this case, a threshold value is set by designating a denomination and a fitness-type of fit money. Then, money of a denomination and a fitness-type of fit money, whose quantity in the first money handling apparatus 100 has decreased and reached the threshold value, is detected in the monitoring.

After the denomination of money for replenishing the first money handling apparatus 100 has been determined, a method of determining the quantity of money for replenishment is not particularly limited. The quantity of money for one replenishing process may be set in advance. The quantity of money for replenishment may be determined based on the quantity of money being stored in the first money handling apparatus 100. The quantity of money for replenishment may be determined based on the quantity of money decreased in the first money handling apparatus 100 within a predetermined period in the past. The clerk may input the quantity of money for replenishment into the management server 300.

The management server 300, which has determined the breakdown of money for replenishing the first money handling apparatus 100 based on the past transaction information acquired from the first money handling apparatus 100, notifies the second money handling apparatus 200 of the determination result (B3 in FIG. 1).

Upon receiving the notification from the management server 300, the second money handling apparatus 200 performs a dispensing process of dispensing money for replenishment, based on the content of the notification (C1). The second money handling apparatus 200 dispenses money, based on the quantity of money for each denomination and for each fitness-type of money determined by the management server 300. Since unfit money is not dispensed in the dispensing process, money is dispensed for each denomination and for each fitness-type of fit money determined by the management server 300. The clerk replenishes the first money handling apparatus 100 with the money dispensed from the second money handling apparatus 200 (D1).

As described above, in the money handling system 1, the management server 300 determines the quantity, for each kind, of money with which the first money handling apparatus 100 is replenished, based on information on transactions having been performed in the first money handling apparatus 100 in the past. The money for replenishment is dispensed from the second money handling apparatus 200 by a breakdown determined by the management server 300. The clerk need not input the past transaction information. The clerk can perform the replenishment by merely depositing the money, which has been dispensed from the second money handling apparatus 200, in the first money handling apparatus 100.

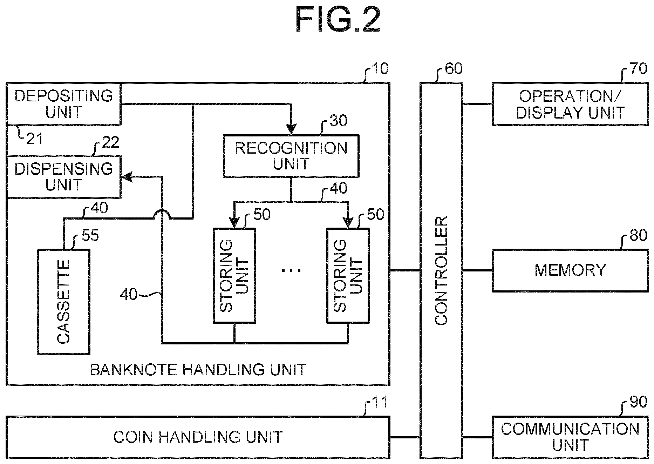

The first money handling apparatus 100 and the second money handling apparatus 200 have the similar configuration. FIG. 2 is a block diagram showing an example of the configuration of the first money handling apparatus 100 and the second money handling apparatus 200.

The first money handling apparatus 100 includes a banknote handling unit 10, a coin handling unit 11, a control unit 60, an operation/display unit 70, a memory 80, and a communication unit 90. The banknote handling unit 10 performs a depositing process and a dispensing process of banknotes. The coin handling unit 11 performs a depositing process and a dispensing process of coins.

The operation/display unit 70 functions as an operation unit for inputting information on money handling processes. The operation/display unit 70 also functions as a display unit for displaying information on money handling processes on a screen. The operation/display unit 70 may be built in the first money handling apparatus 100, or may be independent from the first money handling apparatus 100. The operation/display unit 70 is not limited to the configuration in which the operation unit and the display unit are integrated. The operation unit and the display unit, which are provided independently from each other, may be used as the operation/display unit 70.

The memory 80 is a non-volatile memory device. The memory 80 is used for storing information on money handling processes. Inventory information indicating the kinds and the quantity of money of each kind stored in the first money handling apparatus 100 is stored in the memory 80. The inventory information includes: denominations of money; the quantity of money of each denomination; the fitness types, i.e., fitness-types of fit money and unfit money; and the quantity of money of each fitness type, i.e., the quantity of money of each fitness-type of fit money and unfit money, which are being stored in the first money handling apparatus 100.

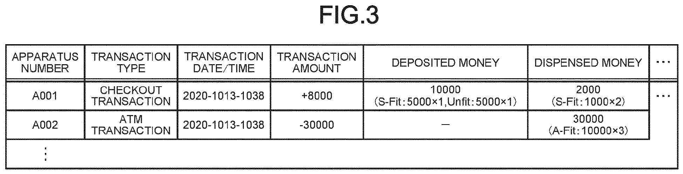

Information on transactions performed in the first money handling apparatus 100 is stored in the memory 80. FIG. 3 shows an example of transaction information. The transaction information includes "apparatus number", "transaction type", transaction date/time", "transaction amount", "deposited money", and "dispensed money".

The apparatus number indicates an identification number of the first money handling apparatus 100. Even when a plurality of first money handling apparatuses 100 are used in the store, which apparatus has been used for each transaction can be identified based on the apparatus number. The transaction type indicates whether the performed transaction is a checkout transaction or an ATM transaction. The transaction date/time indicates the date and time when the transaction was performed. The transaction amount indicates the monetary amount processed in the transaction. The amount is indicated as a positive value when the amount of money stored in the first money handling apparatus 100 is increased by the transaction, and is indicated as a negative value when the amount of money stored in the first money handling apparatus 100 is decreased by the transaction.

The deposited money indicates information on money deposited in the first money handling apparatus 100 through the transaction. The denominations, the quantity for each denomination, the fitness types, and the quantity for each fitness type, of the deposited money can be specified based on the information of the deposited money. The dispensed money indicates information on money dispensed from the first money handling apparatus 100 through the transaction. The denominations, the quantity for each denomination, the fitness types, and the quantity for each fitness type, of the dispensed money can be specified based on the information of the dispensed money.

In FIG. 3, A-Fit, S-Fit, and Unfit indicate ATM-fit money, store-fit money, and unfit money, respectively. FIG. 3 shows that a checkout transaction for a transaction amount of 8,000 JPY has been performed in a first money handling apparatus 100 whose apparatus number is A001. In the checkout transaction, one 5,000-JPY store-fit note and one 5,000-JPY unfit note, i.e., 10,000 JPY in total, have been deposited in the first money handling apparatus 100, and two 1,000-JPY store-fit notes, i.e., 2,000 JPY in total, have been dispensed as change from the first money handling apparatus 100. FIG. 3 also shows that an ATM transaction for a transaction amount of 30,000 JPY has been performed in a first money handling apparatus 100 whose apparatus number is A002. In the ATM transaction, three 10,000-JPY ATM-fit notes have been dispensed from the first money handling apparatus 100.

As shown in FIG. 3, information on each transaction performed in each first money handling apparatus 100 is stored in the memory 80. The transaction information makes it possible to specify the number of ATM transactions and the number of checkout transactions performed in each first money handling apparatus 100. Additionally, the quantity of money of each fitness type of each denomination deposited/dispensed in each transaction can be specified based on the transaction information. By using a part or the entirety of the transaction information shown in FIG. 3, the management server 300 determines a breakdown of money for replenishing the first money handling apparatus 100 as described with reference to FIG. 1.

The communication unit 90 shown in FIG. 2 transmits/receives data to/from the management server 300. For example, the communication unit 90 transmits the transaction information to the management server 300. The control unit 60 controls the respective units while using the information inputted through the operation/display unit 70 and the communication unit 90, and the information stored in the memory 80, whereby the functions and operations of the first money handling apparatus 100 according to the present embodiment are realized.

The banknote handling unit 10 includes a depositing unit 21, a dispensing unit 22, a recognition unit 30, a transport unit 40, a plurality of storing units 50, and a cassette 55. The cassette 55 is a storing unit detachably mounted to the first money handling apparatus 100.

The depositing unit 21 receives banknotes when a depositing process is performed by the first money handling apparatus 100. The dispensing unit 22 discharges banknotes fed out from the storing units 50, to the outside of the first money handling apparatus 100 when a dispensing process is performed by the first money handling apparatus 100,. The transport unit 40 transports banknotes inside the first money handling apparatus 100. The recognition unit 30 may include a plurality of types of sensors. The recognition unit 30 recognizes denominations, authenticity, and fitness types of the banknotes being transported by the transport unit 40. The recognition unit 30 can also count the banknotes.

In the depositing process, the banknotes to be deposited are received in the depositing unit 21 and transported, one by one, by the transport unit 40. Each banknote is recognized by the recognition unit 30, and stored in the storing unit 50. The kinds of banknotes to be stored in the respective storing units 50 can be set in advance. Based on a result of recognition by the recognition unit 30, the banknotes can be stored for each denomination into the plurality of storing units 50. The banknotes can also be stored for each fitness type into the plurality of storing units 50. Information indicating the denomination and the fitness type of banknotes in each storing unit 50 is stored in the memory 80. Information indicating the number of banknotes in the storing unit 50 is also stored for each denomination and each fitness type, in the memory 80.

In the dispensing process, banknotes to be dispensed are fed out, one by one, from the storing units 50, and transported by the transport unit 40. These banknotes are dispensed from the dispensing unit 22. In the dispensing process for a checkout transaction, store-fit money is dispensed from the dispensing unit 22. In the dispensing process for an ATM transaction, ATM-fit money is dispensed from the dispensing unit 22.

A replenishment process is performed by using the depositing unit 21 or the cassette 55. The replenishment process using the depositing unit 21 is started with banknotes for replenishment being placed in the depositing unit 21. The banknotes for replenishment placed in the depositing unit 21 are recognized by the recognition unit 30 and stored in the corresponding storing units 50, as in the case of the depositing process. Information indicating the kinds, which includes denominations and fitness types, of banknotes for replenishment and information indicating the number of banknotes for each of the kinds are stored in the memory 80.

The replenishment process using the cassette 55 is started with banknotes for replenishment being stored in the cassette 55. The banknotes in the cassette 55 are fed out one by one, and transported by the transport unit 40 toward the recognition unit 30. Thereafter, as in the case of replenishment through the depositing unit 21, the banknotes are recognized by the recognition unit 30 and stored in the corresponding storing units 50.

Although not shown in FIG. 2, the coin handling unit 11 includes a depositing unit, a dispensing unit, a recognition unit, a transport unit, a plurality of storing units, and a cassette, which function for coins in the same way as those of the banknote handling unit 10. The coin handling unit 11 is capable of performing a depositing process, a dispensing process, and a replenishment process of coins.

The second money handling apparatus 200 has the configuration similar to that of the first money handling apparatus 100 shown in FIG. 2. The second money handling apparatus 200 is capable of performing a depositing process and a dispensing process in the same way as those performed by the first money handling apparatus 100. A dispensing process of dispensing money for replenishing the first money handling apparatus 100 is performed by using the dispensing unit 22 or the cassette 55.

When the first money handling apparatus 100 is replenished with banknotes through the depositing unit 21 thereof, banknotes for replenishment are dispensed from the dispensing unit 22 of the second money handling apparatus 200. The banknotes dispensed from the second money handling apparatus 200 are placed in the depositing unit 21 of the first money handling apparatus 100 and fed into inside the apparatus, and the storing units 50 are replenished with the banknotes, as described above. When the first money handling apparatus 100 is replenished with banknotes by using the cassette 55, banknotes dispensed from the second money handling apparatus 200 are stored in the cassette 55 mounted to the second money handling apparatus 200. The cassette 55, in which the banknotes for replenishment have been stored, is dismounted from the second money handling apparatus 200 and mounted to the first money handling apparatus 100. The banknotes in the cassette 55 are fed out from the cassette 55, and the storing units 50 in the first money handling apparatus 100 are replenished with the banknotes as described above. A coin replenishment process between the second money handling apparatus 200 and the first money handling apparatus 100 is performed in the same way as the banknote replenishment process.

A plurality of first money handling apparatuses 100 may be installed in one store. For example, a plurality of checkout counters are installed in the store, and each checkout counter is provided with one first money handling apparatus 100. Meanwhile, one second money handling apparatus 200 is installed in a back office of the store, for example. The second money handling apparatus 200 is larger in size than the first money handling apparatus 100 so as to deal with money collected from the plurality of first money handling apparatuses 100 and money for replenishing the plurality of first money handling apparatuses 100.

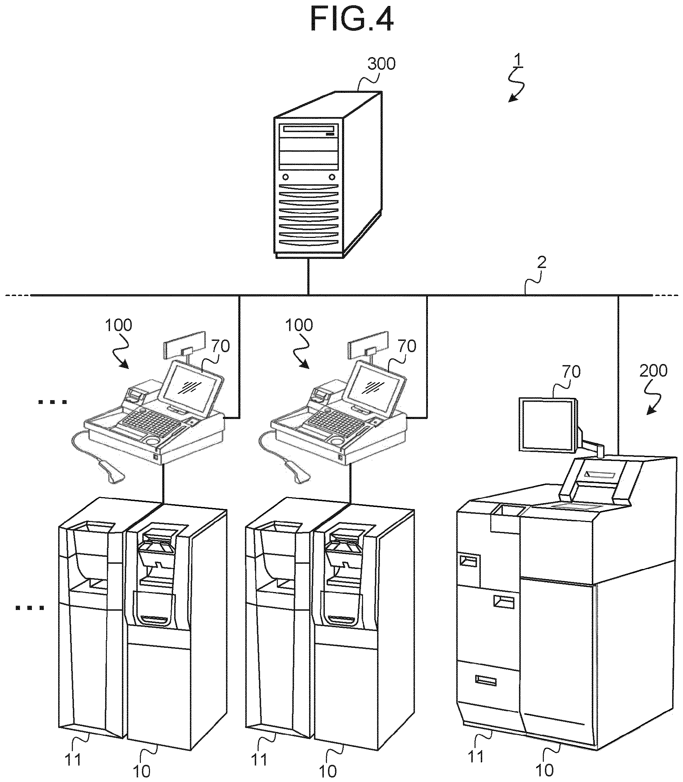

FIG. 4 shows a specific example of the money handling system 1. A plurality of first money handling apparatuses 100, a second money handling apparatus 200, and a management server 300 are communicably connected to each other via a network 2.

Each first money handling apparatus 100 includes a POS terminal connected to a banknote handling unit 10 and a coin handling unit 11. The POS terminal functions as an operation/display unit 70. A banknote depositing process and a banknote dispensing process can be performed by using the banknote handling unit 10 of the first money handling apparatus 100 through operations of the POS terminal. A coin depositing process and a coin dispensing process can be performed by using the coin handling unit 11 of the first money handling apparatus 100 through operations of the POS terminal.

The second money handling apparatus 200 includes an operation/display unit 70 that is a touch-panel type liquid crystal display device. In the second money handling apparatus 200, a banknote depositing process and a banknote dispensing process can be performed by using the banknote handling unit 10 through operations of the operation/display unit 70. In the second money handling apparatus 200, a coin depositing process and a coin dispensing process can be performed by using the coin handling unit 11 through operations of the operation/display unit 70.

A customer who purchases items at the store performs checkout at a checkout counter. The clerk enters information on the items by operating the POS terminal, whereby a purchased amount, which is to be paid by the customer for purchasing the items, is determined. The customer performs a depositing process by using the first money handling apparatus 100 to pay the purchased amount. The customer can deposit banknotes and coins in the banknote handling unit 10 and the coin handling unit 11 of the first money handling apparatus 100, respectively. When change is to be returned to the customer, the first money handling apparatus 100 performs a dispensing process. The first money handling apparatus 100 can dispense banknotes for the change from the banknote handling unit 10, and dispense coins for the change from the coin handling unit 11. The banknotes and coins for the change dispensed from the first money handling apparatus 100 are banknotes and coins that have been recognized as store-fit money by the recognition unit 30.

The customer can also perform a process, which can be performed by using an ATM, at the checkout counter. For example, the customer holds a cash card such that a card reader connected to the POS terminal can read information from the cash card, whereby the first money handling apparatus 100 can perform a dispensing process to dispense money having been withdrawn from his/her bank account. In the dispensing process, banknotes and coins can be dispensed from the banknote handling unit 10 and the coin handling unit 11 of the first money handling apparatus 100, respectively. The banknotes and coins dispensed from the first money handling apparatus 100 are banknotes and coins that have been recognized as ATM-fit money by the recognition unit 30. The balance in the bank account of the customer is updated based on the amount of money dispensed from the first money handling apparatus 100.

The customer can deposit, in the first money handling apparatus 100, money to be deposited into his/her bank account by causing the card reader connected to the POS terminal to read information from the cash card. The customer can deposit banknotes and coins in the banknote handling unit 10 and the coin handling unit 11 of the first money handling apparatus 100, respectively. Information on the amount of money deposited in the first money handling apparatus 100 is transmitted to the financial institution. The balance in the bank account of the customer is updated based on the amount of the deposited money.

The checkout transaction and the ATM transaction are performed by using the first money handling apparatus 100 at the checkout counter as described above, and the transaction information is stored in the memory 80 as shown in FIG. 3. When the quantity of money being stored in the first money handling apparatus 100 has decreased and reached a predetermined threshold value while performing the checkout transaction and the ATM transaction, it is determined to perform a replenishment process for the first money handling apparatus 100. For example, the first money handling apparatus 100 determines to perform the replenishment process, based on the quantity of money therein.

For example, the quantity of money for one replenishment process has been set in advance, based on the quantity of money storable in the storing units 50 of the first money handling apparatus 100. The first money handling apparatus 100 notifies the management server 300 of the denomination and quantity of money for replenishment.

Upon receiving the notification, the management server 300 starts a process of determining a breakdown of the money for replenishing the first money handling apparatus 100, i.e., a breakdown of money for replenishment to be dispensed from the second money handling apparatus 200.

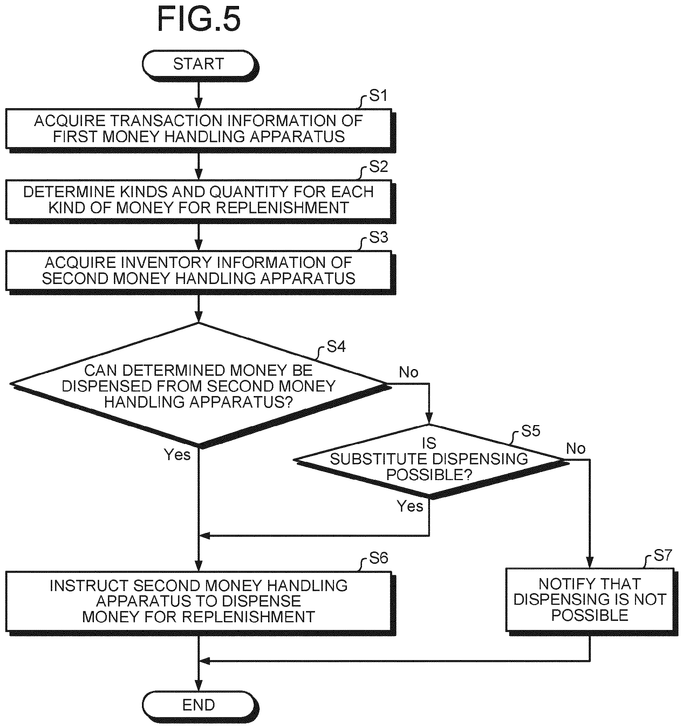

FIG. 5 is a flowchart showing a flow of a process in which the management server 300 determines a breakdown of money for replenishment. The management server 300 acquires the transaction information stored in the memory 80 of the first money handling apparatus 100 (step S1). Based on the transaction information, the management server 300 determines the kinds and the quantity for each kind of the money for replenishment (step S2) as described with reference to FIG. 1.

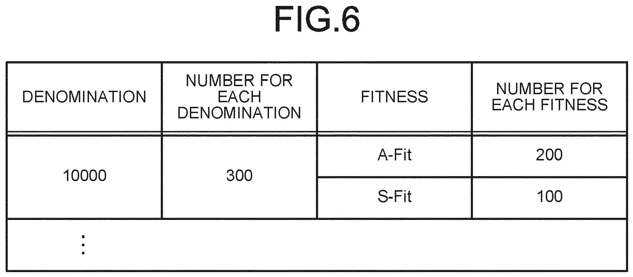

FIG. 6 illustrates an example for explaining a breakdown of money for replenishment, determined by the management server 300. As shown in FIG. 6, the management server 300 determines denominations, the quantity for each denomination, fitness types, and the quantity for each fitness type, of the money for replenishment. FIG. 6 shows that the first money handling apparatus 100 is replenished with three hundred 10,000-JPY notes, and the breakdown includes two hundred ATM-fit 10,000-JPY notes (A-Fit) and one hundred store-fit 10,000-JPY notes (S-Fit). When the first money handling apparatus 100 needs to be replenished with money of a plurality of denominations, fitness-types of money and the quantity for each fitness type are determined for each denomination of the money for replenishment. Since replenishment of a money handling apparatus is performed by using fit money that can be dispensed in a dispensing process by this money handling apparatus, the fitness-types and the quantity of each of the fitness-types of fit money are determined for each denomination of the money used for the replenishment, as shown in FIG. 6.

When the breakdown of the money for replenishment, i.e., the breakdown of the money to be dispensed from the second money handling apparatus 200, has been determined, the management server 300 acquires inventory information of the second money handling apparatus 200 (step S3), and determines whether or not the determined money for replenishment can be dispensed from the second money handling apparatus 200 (step S4) .

The second money handling apparatus 200 has the inventory information stored in the memory 80. The inventory information includes information on denominations, the quantity of each denomination, fitness types, and the quantity of each of the fitness types, of money being stored in the second money handling apparatus 200. The management server 300 acquires the inventory information to determine whether or not all the money for replenishment determined in step S2 can be dispensed from the second money handling apparatus 200.

If all the money for replenishment determined in step S2 cannot be dispensed from the second money handling apparatus 200, the management server 300 determines whether or not a substitute dispensing process can be performed in the second money handling apparatus 200 (step S5).

The substitute dispensing process may be performed in a case where money of a certain denomination cannot be dispensed. In the substitute dispensing process, the amount of money of the certain denomination, which cannot be dispensed, is dispensed by a combination of money of other denominations lower than the certain denomination. The management server 300 determines whether or not ATM-fit money that cannot be dispensed from the second money handling apparatus 200 can be substituted and dispensed by ATM-fit money of other denominations. Likewise, the management server 300 determines whether or not store-fit money that cannot be dispensed from the second money handling apparatus 200 can be substituted and dispensed by store-fit money of other denominations.

The substitute dispensing process to be performed in the money handling system 1 may include: a process of dispensing, by store-fit money, an amount of money that cannot be dispensed by ATM-fit money; and/or a process of dispensing, by ATM-fit money, an amount of money that cannot be dispensed by store-fit money. When there is ATM-fit money that cannot be dispensed from the second money handling apparatus 200, the management server 300 determines in step S5 whether or not store-fit money of the same denomination can be dispensed as a substitute for the ATM-fit money that cannot be dispensed. When there is store-fit money that cannot be dispensed from the second money handling apparatus 200, the management server 300 determines in step S5 whether or not ATM-fit money of the same denomination can be dispensed as a substitute for the store-fit money that cannot be dispensed. If money of the same denomination cannot be dispensed in spite of changing the fitness-type of fit money, the management server 300 determines whether or not substitute dispensing can be performed by changing the fitness-type of fit money and combining lower denominations.

As described above, in the money handling system 1, it is possible to select a type of the substitute method to be performed in a substitute dispensing process from among: a substitute method in which the denomination is not changed but the fitness type is changed; a substitute method in which the fitness type is not changed but the denomination is changed; and a substitute method in which both the denomination and the fitness type are changed. Moreover, the priority order can be set for each of the selected substitute methods.

Specifically, for example, when ATM-fit money cannot be dispensed, it is possible to select a substitute dispensing process to be performed from among: a substitute dispensing process of dispensing store-fit money of the same denomination; a substitute dispensing process of dispensing a combination of ATM-fit money of lower denominations; and a substitute dispensing process of dispensing a combination of store-fit money of lower denominations. Moreover, the priority orders can be set for the selected substitute dispensing processes.

Likewise, when store-fit money cannot be dispensed, it is possible to select a substitute dispensing process to be performed from among: a substitute dispensing process of dispensing ATM-fit money of the same denomination; a substitute dispensing process of dispensing a combination of store-fit money of lower denominations; and a substitute dispensing process of dispensing a combination of ATM-fit money of lower denominations. Moreover, the priority orders can be set for the selected substitute dispensing processes.

Selection of types of the substitute dispensing process and setting of priority orders of the selected substitute dispensing processes can be performed for each denomination. For example, as for dispensing of an ATM-fit 10,000-JPY note, it is possible to set which substitute dispensing process should be allowed among: a substitute dispensing process of dispensing a store-fit 10,000-JPY note; a substitute dispensing process of dispensing a combination of ATM-fit 1,000-JPY notes and/or an ATM-fit 5,000-JPY note; and a substitute dispensing process of dispensing a combination of store-fit 1,000-JPY notes and/or a store-fit 5,000-JPY note. Moreover, the priority orders of the allowed substitute dispensing processes can be set. Different settings may be made for an ATM-fit 10,000-JPY note and an ATM-fit note of another denomination. Moreover, different settings may be made for an ATM-fit 10,000-JPY note and a store-fit 10,000-JPY note. That is, a setting of a substitute dispensing process can be performed for each denomination and for each fitness-type of fit money.

In the money handling system 1, it is also possible to perform a mixed substitute dispensing process in which both ATM-fit money and store-fit money are dispensed. This substitute dispensing process is a fit-money-mixed dispensing process since unfit money is not used for dispensing processes. For example, in the money handling system 1, if an ATM-fit 10,000-JPY note cannot be dispensed and the amount of 10,000 JPY cannot be dispensed even by a combination of an ATM-fit 5,000-JPY note and/or ATM-fit 1,000-JPY notes, the fit-money-mixed substitute dispensing process is performed. In this substitute dispensing process, for example, the amount of 10,000 JPY is dispensed by combining one ATM-fit 5,000-JPY note and five store-fit 1,000-JPY notes. Whether or not such a fit-money-mixed substitute dispensing process can be allowed may be set for each denomination and for each fitness-type of fit money. Moreover, the priority order can be set for each of dispensing processes including the fit-money-mixed substitute dispensing process and other substitute dispensing processes.

When the second money handling apparatus 200 cannot perform the substitute dispensing process (step S5; No), the management server 300 determines that money for replenishment cannot be dispensed from the second money handling apparatus 200, notifies of the determination result (step S7), and ends the process. The notification is performed by displaying the fact that the dispensing process cannot be performed and the reason thereof on the screen of the operation/display unit 70 of the second money handling apparatus 200. Upon receiving the notification, the clerk checks the kinds and the quantity for each kind of money that cannot be dispensed from the second money handling apparatus 200, and copes with this situation. The similar notification may be performed on the display unit of the management server 300.

When all the money for replenishment determined in step S2 can be dispensed from the second money handling apparatus 200 (step S4; Yes), the management server 300 instructs the second money handling apparatus 200 to dispense the money for replenishment (step S6), and ends the process.

Even when money that cannot be dispensed from the second money handling apparatus 200 is included in the money for replenishment determined in step S2 (step S4; No), if an amount of this money can be dispensed by the substitute dispensing process (step S5; Yes), the management server 300 changes the breakdown of the money for replenishment determined in step S2 so as to include the money that can be dispensed by the substitute dispensing process determined in step S5. The management server 300 instructs the second money handling apparatus 200 to dispense the money for replenishment based on the changed breakdown (step S6), and ends the process.

As a result, the money for replenishment, of the kinds and the quantity for each kind determined by the management server 300, is dispensed from the second money handling apparatus 200. That is, money is dispensed by the quantity for each denomination and the quantity for each fitness-type of fit money determined by the management server 300. The clerk can complete the replenishment process by depositing the money for replenishment dispensed from the second money handling apparatus 200, into the first money handling apparatus 100.

Although FIG. 5 shows the example in which the management server 300 performs the determination processes in step S4 and step S5, the management server 300 may just notify the second money handling apparatus 200 of the determination result in step S2. In this case, the second money handling apparatus 200 may perform the determinations processes in step S4 and step S5 based on the inventory amount of money therein, and perform the notification process in step S7 based on the determination result. Although FIG. 5 shows the example in which the substitute dispensing process can be performed, the substitute dispensing process may not be performed in the money handling system 1.

In FIG. 5, the notification process is performed when the second money handling apparatus 200 cannot perform the dispensing process for the money for replenishment. However, the notification process may be performed even when the dispensing process can be performed. Specifically, after determining to perform a substitute dispensing process, a notification process regarding the substitute dispensing process may be performed. For example, when the substitute dispensing process is performed because there is ATM-fit money that cannot be dispensed, information regarding the ATM-fit money that cannot be dispensed may be displayed on at least one of the screen of the operation/display unit 70 of the second money handling apparatus 200 and the screen of the management server 300. Upon checking the notification screen, the clerk recognizes the shortage of the ATM-fit money, and requests the CIT company to deliver the ATM-fit money to the store. The notification process may be performed not only when ATM-fit money is insufficient but also when store-fit money is insufficient.

When there is ATM-fit money that cannot be dispensed from the second money handling apparatus 200 in step S4, the management server 300 may automatically perform the process of requesting the CIT company to deliver the ATM-fit money. For example, the management server 300 transmits, to a server device used by the CIT company, information for requesting the CIT company to deliver, to the store, a predetermined quantity of ATM-fit money that cannot be dispensed from the second money handling apparatus 200. Based on the information received from the management server 300, the CIT company can deliver the money to the store, whereby the shortage of the money in the store is resolved. The notification process to the CIT company may be performed not only when ATM-fit money is insufficient but also when store-fit money is insufficient.

The present embodiment shows examples in which the fitness types include ATM-fit money, store-fit money, and unfit money. However, the fitness types are not limited thereto. Fit money may be sorted into three or more kinds, and unfit money may be sorted into two or more kinds.

In what condition of money should be regarded as fit money or unfit money depending on the degree of damage of money can be set by a user of the money handling system 1. The aforementioned sorting of money into the fitness types, i.e., ATM-fit money, store-fit money, and unfit money, and the aforementioned method of using money of each fitness type are merely examples, and do not limit a sorting method of fitness types and a method of using sorted money. Moreover, the processes described mainly for banknotes are also applicable to coins.

The components of the money handling system 1 according to the present embodiment are conceptually functional components, and thus may not necessarily be physically limited thereto. For example, the second money handling apparatus 200 may implement a part or the entirety of the functions and operations of the management server 300. Distributed or integrated forms of each device are not limited to the forms described above, and all or some of the forms may be distributed or integrated functionally or physically in any unit depending on various loads, use statuses, or the like.

For example, although the money handling system 1 includes the first money handling apparatus 100, the second money handling apparatus 200, and the management server 300, the money handling system 1 may not include the management server 300 and the second money handling apparatus 200 may implement the entirety of the function and operation of the management server 300. That is, the second money handling apparatus 200 may also serve as the management server 300.

As described above, in the money handling system according to the present embodiment, when replenishing a money handling apparatus with money, the quantity of money for replenishment is automatically determined for each kind of money. The kinds and the quantity for each kind, of the money for replenishment, are determined based on the contents of transactions having been performed in the money handling apparatus in the past. For example, a breakdown of the money for replenishment is determined based on the kinds of transactions performed in the past, and on the kinds and the quantity for each kind of money deposited/dispensed in/from the money handling apparatus for each kind of transaction. Thus, replenishment of the money handling apparatus with money can be appropriately performed. The money for replenishment whose breakdown has been determined by the money handling system is dispensed from another money handling apparatus. Thus, the user of the money handling system can easily perform the work of replenishing the money handling apparatus with money.

### INDUSTRIAL APPLICABILITY

As described above, the money handling system and the money handling method according to the present disclosure are usable for appropriately replenishing a money handling apparatus with money.

## Claims

1. A money handling system comprising:
a first money handling apparatus configured to perform a plurality of kinds of transactions in which different fitness-types of fit money are dispensed;
a management server configured to determine, when the first money handling apparatus needs to be replenished with money, a breakdown of the money for replenishment, based on information on the plurality of kinds of transactions performed by the first money handling apparatus, the breakdown showing a quantity of each fitness-type of fit money to be included in the money for replenishment; and
a second money handling apparatus configured to dispense the money for replenishment, based on a result of determination by the management server.

2. The money handling system according to claim 1, wherein
the transactions performed by the first money handling apparatus include: an ATM transaction in which money corresponding to an amount of money that a customer has withdrawn from an account at a financial institution is dispensed; and a checkout transaction in which money corresponding to an amount of change to be returned to the customer at checkout is dispensed,
the fit money of different fitness-types include: first fit money to be dispensed in the ATM transaction; and second fit money to be dispensed in the checkout transaction, and
the management server determines the breakdown showing a quantity of the first fit money and a quantity of the second fit money to be included in the money for replenishment, based on information on the ATM transaction and the checkout transaction performed by the first money handling apparatus.

3. The money handling system according to claim 1 or 2, wherein the management server determines the breakdown showing the quantity of each fitness-type of fit money to be included in the money for replenishment, based on the numbers of the plurality of kinds of transactions performed by the first money handling apparatus within a predetermined period.

4. The money handling system according to claim 1 or 2, wherein the management server determines the breakdown showing the quantity of each fitness-type of fit money to be included in the money for replenishment, based on a quantity of each fitness-type of fit money increased or decreased in the first money handling apparatus within a predetermined period.

5. The money handling system according to claim 4, wherein
the management server
inputs data indicating a quantity of each fitness-type of fit money that has been increased or decreased in the first money handling apparatus within a predetermined period, into a simulation model for predicting a quantity of each fitness-type of fit money that will be dispensed from the first money handling apparatus,
performs a simulation with the simulation model, and
determines the breakdown showing the quantity of each fitness-type of fit money to be included in the money for replenishment, based on a result of the simulation.

6. The money handling system according to any one of claims 1 to 5, wherein when the second money handling apparatus cannot dispense the money for replenishment based on the breakdown determined for each fitness-type of fit money by the management server, the second money handling apparatus notifies this fact.

7. The money handling system according to any one of claims 1 to 6, wherein
when the second money handling apparatus cannot dispense each fitness-type of fit money based on the breakdown of the money for replenishment determined by the management server,
the second money handling apparatus performs at least one of:
a substitute dispensing process for dispensing money, of which a fitness type is changed from that of the fit money but a denomination is not changed from that of the fit money;
a substitute dispensing process for dispensing money, of which a fitness type is not changed from that of the fit money but a denomination is changed from that of fit money; and
a substitute dispensing process for dispensing money, of which both a fitness type and a denomination is changed from those of the fit money.

8. The money handling system according to any one of claims 1 to 7, wherein when the management server recognizes that the money for replenishment cannot be dispensed from the second money handling apparatus based on the breakdown determined for each fitness-type of fit money, the management server notifies this fact.

9. The money handling system according to any one of claims 1 to 8, wherein when the management server recognizes that the money for replenishment cannot be dispensed from the second money handling apparatus based on the breakdown determined for each fitness-type of fit money, the management server performs a process for requesting a CIT company to deliver money.

10. A money handling method performed by a money handling system, the method comprising:
performing a plurality of kinds of transactions in which different fitness-types of fit money are dispensed from a first money handling apparatus;
determining, by a management server, a breakdown of money for replenishment when replenishing the first money handling apparatus with the money, based on information on the plurality of kinds of transactions performed by using the first money handling apparatus, the breakdown showing a quantity of each fitness-type of fit money to be included in the money for replenishment; and
dispensing, from a second money handling apparatus, the money for replenishment, based on a result of determination by the management server.
